# EUROPÄISCHE PATENTSCHRIFT

(11) **EP 0 388 694 B1**
(45) Veröffentlichungstag und Bekanntmachung des Hinweises auf die Patenterteilung: **10.11.1993**
(21) Anmeldenummer: 90104164.0
(22) Anmeldetag: 03.03.1990
(51) Int. Cl.: F16B 13/06

(54) **Spreizdübel**
Expandible plug
Cheville expansible

(30) Priorität: 09.03.1989 DE 3907593
(43) Veröffentlichungstag der Anmeldung: 26.09.1990
(73) Patentinhaber: Adolf Würth GmbH & Co. KG, D-74653 Künzelsau (DE)
(72) Erfinder: Weidner, Karl, D-7118 Ingelfingen (DE)
(74) Vertreter: Patentanwälte Ruff, Beier, Schöndorf und Mütschele

(56) Entgegenhaltungen:
- DE-A- 1 911 632
- DE-A- 2 504 753
- FR-A- 2 257 035
- FR-A- 2 336 583

## Beschreibung

Die Erfindung betrifft einen Spreizdübel aus Kunststoff, mit einem Dübelkopf, einem an diesen anschließenden Dübelschaft, der durch Längsschlitze in mehrere verformbare Segmente aufgeteilt ist, sowie mit einem am vorderen Ende des Schafts angeordneten Dübelfuß, der als Hülse mit einer eine Schraube aufnehmenden Bohrung ausgebildet ist, wobei der Dübelfuß bei Anziehen der Schraube durch Axialbewegung die Segmente nach außen verbiegt.

Es ist bereits ein Dübel dieser Art bekannt (DE-C-22 54 602 und FR-A-2 257 035). Hierbei handelt es sich einen sogenannten Universaldübel, der also sowohl in Wänden mit einer exakten zylindrischen Bohrung als auch in Hohlkammersteinen o. dgl. verwendet werden kann. Daher ist der Dübel mit Vorteil in den Fällen anwendbar, wo der Benutzer nicht weiß, wie die Wand beschaffen ist, in der er den Dübel einsetzt. Je nach Art des Wandmaterials findet eine unterschiedliche Art der Festlegung des Dübels statt. Bei zylindrischen Bohrungen, beispielsweise im Beton, werden die stegartigen Segmente leicht nach außen verformt und legen den Dübel auf diese Weise fest. Bei Hohlkammersteinen werden die Segmente stark nach außen verformt, so daß ein Formschluß auftritt. In beiden Fällen ist es für das Arbeiten des Dübels erforderlich, daß dieser sich beim Eindrehen der Schraube nicht mitdreht. Der Dübel wird zum Einsetzen in das Loch in dieses eingeschlagen. Um eine Drehung zu verhindern, muß er relativ stramm in dem Dübelloch sitzen. Dies führt zu einer Druckbeaufschlagung bzw. zu einer Stauchung des Dübels.

Es ist ebenfalls schon bekannt, bei einem derartigen Universaldübel auf der Außenseite der Stege scharfkantige Flossen anzubringen, deren Außenkanten sich beim Anziehen der Dübelschraube in die Lochwandung eindrücken und dadurch ein Verdrehen in beiden Richtungen verhindern. Diese in Längsrichtung verlaufenden Flossen verstärken den Dübelschaft gegenüber einer Stauchung.

Weiterhin bekannt ist Dübel aus Kunststoff (DE-A1 36 10 655), der einen sich über etwa die Hälfte des Dübels erstreckenden Hals und einen sich daran anschließenden Spreizteil mit Längsschlitz aufweist. Dieser Dübel muß ohne eigesetzte Schraube in das Bohrloch eingeschlagen. Beim Einschrauben der Schraube formt diese sich an der Innenseite des Spreizteils ein Gewinde.

Weiterhin bekannt ist ein Dübel (DE-A1 34 26 994) der ebenfalls ohne eingesetzte Schraube in das Bohrloch eingesetzt werden muß.

Bei einem weiteren bekannten Dübel (DE-A1 25 04 753) ist absichtlich vorgesehen, daß der Dübel sich beim Einschrauben der nachträglich eingesetzten Schraube verdreht.

Weiterhin bekannt ist ein Kunststoffdübel (FR-A-23 36 583) mit einem im Dübelfuß angeordneten Gewinde, bei dem zwei sich durch Verformen aufspreizende Segmente und mittig zwischen diesen zwei durch Aufklappen wirkende geradlinig bleibende Segmente vorhanden sind. Je nach Form des Dübellochs wirkt das eine oder das andere Paar der Segmente.

Der Erfindung liegt die Aufgabe zugrunde einen Dübel dieser Art zu schaffen, der weiterhin als Universaldübel für die unterschiedlichsten Gegebenheiten verwendet werden kann, der aber im Hinblick auf seine Gebrauchseigenschaften insbesondere das aufzuwendende Drehmoment, weiter verbessert ist.

Zur Lösung dieser Aufgabe schlägt die Erfindung einen Dübel mit den Merkmalen des Anspruchs 1 vor. Weiterbildungen sind Gegenstand der Unteransprüche.

Es wird nun möglich, den Dübel bereits vor der Montage mit einer Schraube zu versehen, die mindestens teilweise in das Gewinde des Dübelfußes eingeschraubt ist. Der Dübel kann auf diese Weise vormontiert zur Durchsteckmontage verwendet werden. Das Einführen des Dübels in das Bohrloch kann durch Schlagen auf den Kopf der Schraube erreicht werden, wobei der Dübel dann nicht mehr auf Druck, sondern auf Zug beansprucht wird. Dies führt zu einem verbesserten Einziehen des Dübels in das Bohrloch. Beim Festdrehen der Schraube und dem dadurch bewirkten Aufspreizen der Dübelsegmente entstehet ein geringeres Gegendrehmoment, da der Widerstand gegen das Einschrauben der Schraube verringert wird. Dadurch wird die Gefahr verringert, daß sich der Dübel beim Festdrehen der Schraube mitdreht. Gerade bei einer Durchsteckmontage, bei der also der Dübelkopf gar nicht mehr sichtbar ist, könnte ja ein Durchdrehen des Dübels zunächst gar nicht bemerkt werden.

Die durch die Erfingung bewirkte Verringerung des Einschraubdrehmoments kann bereits dann erreicht werden, wenn das Gewinde nicht vollständig ausgeformt wird, beispielsweise der Spitzendurchmesser der Gewindegänge einen etwas kleineren Durchmesser aufweist als die zugehörige Schraube.

Die Tatsache, daß die Dübel bereits mit der zugehörigen Schrauben vorkonfektioniert geliefert werden, hat den weitern Vorteil, daß der Benutzer sicher sein kann, daß in dem Dübel die für diesen Dübel geeignete Schraube verwendet wird. Die Haltewirkung eines Dübels ist in weitem Maße davon abhängig, daß die richtige Schraube, insbesondere die im Durchmesser richtige Schraube, verwendet wird.

Die Erfindung sieht vor, daß der Dübelschaft mehrere etwa radial nach außen gerichtete, in Längsrichtung verlaufende schmale Flossen aufweist, die sich bei Aufspreizung in die Wandung bohren und dadurch ein Verdrehen der Schraube in beiden Richtungen verhindern.

Diese Flossen verstärken unter anderem die Steifigkeit der Segmente des Dübelschaftes in Längsrichtung. Der Dübel soll aber auch in Hohlkammersteinen oder hinter Platten verwendet werden können, wo die Segmente soweit aufgespreizt werden sollen, daß praktisch ein Formschluß entsteht. Hier verursachen die Flossen, daß das aufzuwendende Drehmoment erhöht wird, da sie sich einer Ausbiegung wiedersetzen. Wiederum entsteht die Gefahr, daß der Dübel mitdreht. Um dies zu verhindern, schlägt die Erfindung vor, daß mindestens eine Flosse im Bereich ihrer radialen Außenseite je mindestens einen Einschnitt bzw. eine Kerbe aufweist. Diese Kerbe, die sich von der Außenseite her in die Flosse erstreckt, beseitigt nicht die Wirkung der Flosse sowohl beim Eindringen in die Bohrungswand als auch bei der Verstärkung in Längsrichtung, insbesondere dann nicht, wenn die Kerbe sich nicht bis zur Außenseite des Segments erstreckt. Die Kerbe ermöglicht andererseits die leichtere Ausknickung der Segmente.

In Weiterbildung kann vorgesehen sein, daß auch die Segmente selbst an ihrer Außenseite je mindestens eine quer zur Längsachse des Dübels verlaufende Rille, Kerbe o. dgl. aufweisen. Auch dies führt zur Erleichterung des Eindrehens und Festschraubens der Schraube, insbesondere bei starker Aufbiegung.

Besonders günstig ist es, wenn jedes Segment eine Flosse und auch jedes Segment eine Rille aufweist.

In Weiterbildung der Erfindung kann vorgesehen sein, daß der Dübelkopf mehrere äußere in Längsrichtung verlaufende Rippen aufweist, die im Querschnitt vorzugsweise etwa dreieckförmig mit nach außen gerichteter Spitze ausgebildet sind. Diese Rippen dienen zur drehgesicherten Festlegung des Dübelkopfes in der Bohrung, wobei der Dübelkopf eine gewisse Länge aufweist, längs der er nicht nach außen verformbar ist. Auf diese Weise soll die Verformung des Dübelschaftes und damit die Druckbeaufschlagung der Wand von der Oberfläche der Wand ferngehalten werden, damit dort keine Risse entstehen.

Insbesondere kann vorgesehen sein, daß die Innenbohrung des Dübelschaftes größer ist als der Spitzendurchmesser des Gewindes des Dübelfußes. Dies führt dazu, daß die Schraube mit ihrem Gewinde nicht an der Innenseite der Segmente angreift, so daß diese nicht beschädigt werden können.

Um ein leichtes Aufspreizen zu gewährleisten, kann erfindungsgemäß in Weiterbildung vorgesehen werden, daß der Dübel mit leicht nach außen vorgebogenen Segmenten hergestellt wird.

Die Rippen im Bereich des Dübelkopfes haben vorzugsweise eine in Richtung auf das äußere freie Ende des Dübelkopfes zunehmende Radialausdehnung. Daher werden beim Einsetzen bzw. Einschlagen des Dübels nach und nach in Längsrichtung verlaufende Kerben gebildet, wobei das weitere Einschlagen des Dübelkopfes zu einem stärker zunehmenden Eindringen in die Bohrungswandung führt.

Gerade die Kombination der von der Erfindung vorgeschlagenen Maßnahmen, nämlich insbesondere das Vorsehen eines Gewindes in der Bohrung des Dübelfußes und die Anbringung von mit Kerben versehenen Flossen an den mit Rillen versehenen Segmenten führt zu einem Dübel, dessen Eigenschaften als Universaldübel in allen Arten von vorkommenden Anwendungsfällen verbessert wird.

Weitere Merkmale, Einzelheiten und Vorzüge der Erfindung ergeben sich aus der folgenden Beschreibung bevorzugter Ausführungsformen der Erfindung sowie anhand der Zeichnung. Hierbei zeigen:
- Fig. 1: eine Seitenansicht eines von der Erfindung vorgeschlagenen Dübels;
- Fig. 2: einen Längsschnitt durch den Dübel der Fig. 1;
- Fig. 3: eine Stirnansicht des Dübels von seiner Spitze her;
- Fig. 4: einen vergrößerten Teilschnitt durch die Spitze des Dübels nach der Erfindung.

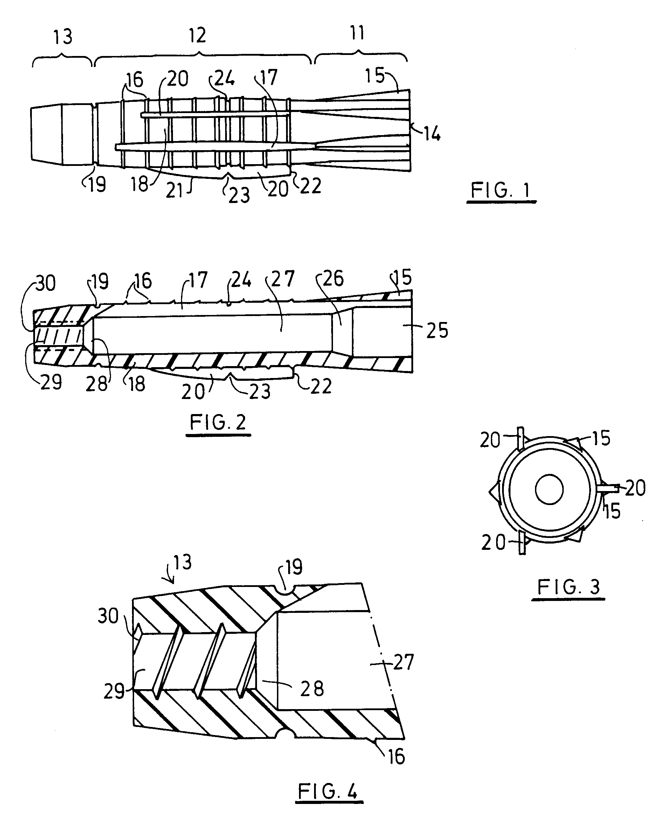

Der in Fig. 1 dargestellte Dübel, der als einstückiges Kunststoffspritzteil hergestellt ist, enthält einen Dübelkopf 11, einen sich daran anschließenden Dübelschaft 12 und im Bereich der Spitze einen sich an den Dübelschaft 12 anschließenden Dübelfuß 13. Der Dübel wird so in eine Bohrung einer Wand eingesetzt, daß das freie Ende 14 des Dübelkopfes 11 etwa bündig mit der Wand verläuft. Der Dübelkopf 11, der sich etwa über ein Viertel der axialen Länge des Dübels erstreckt, ist nicht zur Aufweitung gedacht. Die Aufweitung, die zur Festlegung des Dübels führt, geschieht im wesentlichen ausschließlich im Bereich des Dübelschaftes 12. Auch der den Dübel abschließende Dübelfuß 13, der als eine rotationssymmetrische Hülse ausgebildet ist, erweitert sich beim Festziehen der Schraube nicht.

Der Dübelkopf 11 enthält an seinem Umfang mehrere radial nach außen vorstehende Rippen 15, die langgestreckt in Längsrichtung verlaufen. Ihre radiale Erstreckung nimmt von dem Übergangsbereich zwischen Dübelkopf 11 und Dübelschaft 12 in Richtung auf das freie Ende 14 des Dübelkopfes 11 kontinuierlich zu. An diesem freien Ende ist ihre radiale Ausdehnung am größten. Es sind insgesamt sechs derartige Rippen 15 vorhanden, die jeweils gleichen Abstand voneinander aufweisen. Es sind zwei Arten von unterschiedlichen Rippen 15 vorhanden, die einander abwechseln.

Der Dübelschaft 12 weist eine Reihe von längs des Umfangs in einer Richtung quer zur Längsachse des Dübels verlaufenden sägezahnartigen Ringrippen 16 auf. Deren dreieckiger Sägezahnquerschnitt ist so angeordnet, daß die flache Flanke das Einschieben des Dübels in das Bohrloch erleichtert, während die Kanten an der Außenseite ein Herausziehen erschweren.

Der Dübelschaft 12 weist über den Umfang gleichmäßig verteilt drei in Längsrichtung verlaufende schmale Schlitze 17 auf. Diese von der Außenseite zur Innenseite des hohlen Dübels durchgehenden Schlitze 17 teilen den Dübelschaft 12 in drei stegartige Segmente 18 auf. Jedes Segment 18 kann sich dadurch unabhängig von dem jeweils benachbarten Segment 18 verformen.

Die Schlitze 17 reichen an ihren zur Außenseite der Wand gerichteten Enden unmittelbar bis an die dortigen Rippen 15 heran, wobei jeweils eine Rippe 15 in unmittelbarer axialer Verlängerung jedes Schlitzes 17 angeordnet ist. Auf der gegenüberliegenden, in das Innere des Bohrlochs gerichteten Seite reichen die Schlitze 17 nicht ganz bis zum Ende des Dübelschaftes 12 heran. Das Ende des Dübelschaftes 12 wird von dem Dübelfuß 13 durch eine ringförmig umlaufende nutartige Vertiefung 19 getrennt. Diese nutartige Vertiefung erleichtert das Ausschwenken der stegartigen Segmente 18 nach außen, da sie die Wandstärke etwas herabsetzen.

Der Dübelfuß ist im Bereich seiner Spitze etwas konisch ausgebildet, um sein Einführen und Zentrieren in ein Bohrloch zu erleichtern.

Jedes stegartige Segment 18 weist etwa mittig zwischen den jeweils benachbarten Längsschlitzen eine in Längsrichtung verlaufende schmale Flosse 20 auf, siehe Fig. 1. Diese Flossen 20 sind etwas kürzer als die zwischen ihnen angeordnete Längsschlitze 17. In der Draufsicht, siehe in Fig. 1 die obere Flosse 20, haben diese die Form einer schmalen Platte mit parallelen Seitenwänden. In der Seitenansicht, siehe in Fig. 1 die untere Flosse 20, verläuft die Außenkontur leicht gebogen, wobei die Flossen 20 an ihren dem Dübelfuß 13 zugewandten Enden sich allmählich nach außen erweitern und im Bereich des gegenüberliegenden Endes abrupt enden, so daß ihr dortiges Ende 23 in einer senkrecht zur Längsachse des Dübels liegende Ebene liegt.

Jede Flosse 20 weist etwa in der Mitte ihrer Längsausdehnung eine von der Außenseite her in die Flosse eindringende Kerbe 23 auf. Die Kerbe reicht bis etwa zur halben Radialerstrekkung der Flosse 20, also nicht bis zum Boden der Flosse 20 bzw. zur Außenseite jedes Segments 18. Die Kerbe weist Dreiecksform mit einem angenähert rechten Winkel auf.

An der gleichen Längsstelle des Dübels, an der die Flossen 20 die Kerbe 23 aufweisen, enthalten die Segmente 18 eine umlaufende bzw. quer zur Längsachse verlaufende Rille 24.

Fig. 2 zeigt nun einen Längsschnitt durch den Dübel. Im Bereich des Dübelkopfes 11 enthält dieser eine Innenbohrung 25 mit einem relativ großen Durchmesser, wobei diese Innenbohrung über eine schräge Stufe 26 in den eigentlichen Dübelinnenraum 27 übergeht. Im Bereich des Übergangs zum Dübelfuß 13 verringert sich der Innendurchmesser nochmals über eine schräg verlaufende Schulter 28 und geht in die Bohrung 29 des Dübelfußes 13 über. Diese Bohrung 29 ist mit einem Innengewinde 30 versehen, das in der Zeichnung angedeutet ist. Dieses Innengewinde 30 wird bei Herstellen des Dübels durch Kunststoffspritzen mithergestellt. Die Größe des Gewindes entspricht etwa dem Gewinde der Schraube, die mit dem Dübel zusammenwirken soll. Es ist möglich, daß das Gewinde 30 nicht vollständig ausgebildet wird, sondern beispielsweise nur 80 % der eigentlich erforderlichen Gewindetiefe aufweist.

Der Dübel wird nach Herstellung mit einer Schraube versehen, die in seinen Innenraum 27 eingesteckt und in das Gewinde 30 eingeschraubt wird. Der Dübel kann dann zur Durchsteckmontage verwendet werden, d. h. er wird zusammen mit seiner Schraube, deren Kopf über den Dübelkopf 11 radial vorsteht, durch eine Bohrung in den zu befestigenden Gegenstand in das Dübelloch eingeschoben. Das vollständige Einsetzen des Dübels kann dadurch erreicht werden, daß auf den Schraubenkopf geschlagen wird. Damit wird der Dübel in das Loch hineingezogen, da die Schraube im Bereich des Dübelfußes 13 angreift. Da die Schraube in diesem Bereich jedoch in das Gewinde 30 eingeschraubt ist und längs einer relativ großen Fläche anliegt, besteht keine Gefahr, daß der Dübel in diesem Bereich beschädigt oder überbeansprucht wird.

Beim Einsetzen bzw. Einschlagen des Dübels in das Dübelloch schneiden die in ihrer radialen Ausdehnung und ihrer Breite zunehmenden Rippen 15 sich nach und nach in die Seitenwände des Lochs ein, so daß der Dübel im Bereich des nicht verformbaren Dübelkopfes 11 eine Verdrehsicherung gegenüber dem Loch erhält. Anschließend wird die Schraube mit einem Schraubendreher angezogen. Dies führt zu einer Verschiebung des Dübelfußes 13 in Richtung auf das vordere Ende, was zu einem Ausspreizen des Segmente 18 führt. Je nach Art des Loches findet eine entsprechende Verformung der Segmente 18 statt. Hat das Loch überall den gleichen Durchmesser, der dem Durchmesser im vorderen Bereich entspricht, so findet ein Kraftschluß durch Anpressen der Segmente 18 in der Bohrungswand statt. Hierbei schneiden sich die Flossen 20 in die Wandung ein.

Wird dagegen der Dübel in einem Hohlkammerstein verwendet, so erfolgt bei Anziehen der Schraube ein Aufspreizen der Segmente 18 nach außen. Durch die Vertiefung 19, die Rille 24 in der Außenseite der Segmente 18 und die Kerbe 23 in den Flossen 20 wird das Aufspreizen der Segmente 18 erleichtert und begünstigt. Dennoch führen die Kerben 23 nicht zu einer merkbaren Schwächung des Dübels in Längsrichtung. Zusammen mit der Möglichkeit, den Dübel mit Hilfe der Schraube einzuschlagen, die den Dübel in das Loch hineinzieht, bleibt die Festigkeit des Dübels also vollständig erhalten, wobei gleichzeitig seine Aufbiegbarkeit für große Löcher verbessert wird.

Fig. 3 zeigt eine Ansicht des Dübels von seiner Spitze her. Es ist zu sehen, daß die Flossen 20 etwa gleichmäßig über den Umfang verteilt sind. Eine der drei Flossen verläuft exakt radial gegenüber der Längsachse des Dübels, während die beiden anderen Flossen 20 fast tangential verlaufen. In der Fig. 3 liegen ihre Querrichtungen, also die Richtung ihres Vorspringens gegenüber dem Umfang, in einer Ebene, die senkrecht gegenüber der Ebene der dritten Flosse 20 liegt. Die bedeutet, daß jeweils eine der Flossen 20 besonders günstig das Rechtsdrehen und die andere besonders günstig das Linksdrehen verhindert.

In Längsrichtung unmittelbar hinter den Flossen 20 ist jeweils eine Rippe 15 angeordnet, während die drei anderen Rippen 15 etwa mittig versetzt sind.

Der Dübel kann im Bereich seines freien Endes 14 mit einem nach außen gerichteten Flansch versehen werden, falls er nicht zur Durchsteckmontage verwendet werden soll. In diesem Fall müßte zwar bei einem Teil der Anwendungsfälle die Schraube wieder aus dem Dübel herausgeschraubt werden, bevor der Dübel angebracht werden kann, es bleibt dennoch der Vorteil erhalten, daß der Dübel mit der passenden Schraube geliefert wird und die Dübelverbindung nicht durch Verwendung einer möglicherweise gar nicht für ihn bestimmten Schraube nur wenig haltbar ist.

Fig. 4 zeigt einen vergrößerten Schnitt durch den Dübelfuß 13. Zunächst ist zu sehen, daß der Innenraum 27 einen größeren Durchmesser aufweist, als die Bohrung 29 im vorderen Bereich. Die Bohrung 27 geht über die schräg verlaufende Schulter 28 in die Bohrung 29 über, in deren Wand das Gewinde 30 eingeformt ist, was vorzugsweise bei der Herstellung der Schraube erfolgt. Die Länge der Bohrung 29 ist so gewählt, daß sie drei vollständigen Gewindegängen entspricht. Die in das Gewinde 30 eingeschraubte Schraube liegt also über drei vollständige Gewindegänge flächig an dem Dübelfuß 13 an, so daß die beim Einschlagen mit Hilfe der Schraube auftretende Belastung über eine große Fläche verteilt wird. Dadurch führt das Einschlagen nicht zu einer merklichen Belastung oder gar Verformung des Dübels, wie dies unter Umständen dann eintreten kann, wenn der Dübel selbst eingeschlagen wird.

Die Erfindung schafft einen für unterschiedlichste Anwendungsfälle anwendbaren Dübel, der im Hinblick auf seine Gebrauchsmöglichkeiten für alle Anwendungsfälle verbessert ist.

## Patentansprüche

1. Spreizdübel aus Kunststoff, mit einem Dübelkopf (11), einem an diesen anschließenden Dübelschaft (12), der durch Längsschlitze (17) in mehrere verformbare Segmente (18) aufgeteilt ist, sowie mit einem am vorderen Ende des Schafts (23) angeordneten Dübelfuß (13), der als Hülse mit einer Bohrung (29) zur Aufnahme einer Schraube ausgebildet ist, wobei der Dübelfuß (13) bei Anziehen der Schraube durch Axialbewegung die Segmente (18) nach außen verbiegt und die durch die Längsschlitze (17) voneinander getrennten Segmente (18) je eine etwa radial nach außen gerichtete in Längsrichtung des Dübel verlaufende, schmale Flosse (20) aufweisen, dadurch gekennzeichnet, daß die Bohrung (29) ein Schraubgewinde (30) aufweist und die Flosse (20) im Bereich ihrer radialen Außenseite (21) etwa in der Mitte ihrer Längsausdehnung einen Einschnitt bzw. eine Kerbe (23) aufweist.

2. Spreizdübel nach einem der vorhergehenden Ansprüche, dadurch gekennzeichnet, daß die Segmente (18) des Dübelschafts (12) an ihrer Außenseite je mindestens eine quer zur Längsachse des Dübels verlaufende Rille (24), Kerbe oder dergleichen aufweisen.

3. Spreizdübel nach einem der vorhergehenden Ansprüche, dadurch gekennzeichnet, daß der Dübelkopf (11) mehrere äußere in Längsrichtung verlaufende Rippen (15) aufweist, deren Querschnitt etwa dreieckig mit nach außen gerichteter Spitze ist.

4. Spreizdübel nach Anspruch 3, dadurch gekennzeichnet, daß die Rippen (15) eine in Richtung auf das äußere Ende (14) des Dübelkopfs (11) zunehmende Radialausdehnung aufweisen.

5. Spreizdübel nach Anspruch 3 oder 4, dadurch gekennzeichnet, daß die Rippen (15) eine in Richtung auf das äußere Ende (14) des Dübelkopfs (11) zunehmende Querabmessung aufweisen.

6. Spreizdübel nach einem der vorhergehenden Ansprüche, dadurch gekennzeichnet, daß die Innenbohrung des Dübelschafts (12) einen größeren Durchmesser aufweist als der Spitzendurchmesser des Gewindes (30) des Dübelfußes (29).

7. Spreizdübel nach einem der vorhergehenden Ansprüche, dadurch gekennzeichnet, daß der Dübel mit leicht nach außen vorgebogenen Segmenten (18) hergestellt ist.

8. Spreizdübel nach einem der vorhergehenden Ansprüche, dadurch gekennzeichnet, daß die Gewindegänge des Gewindes (30) nicht vollständig ausgeformt sind.

9. Spreizdübel nach einem der vorhergehenden Ansprüche, dadurch gekennzeichnet, daß die Länge des Gewindes (30) des Dübelfußes (13) derart gewählt ist, daß in ihm mindestens zwei vollständige Gewindewindungen untergebracht sind.

## Claims

1. Plastic straddling dowel with a dowel head (11), a dowel shank (12) connected onto the latter and which is subdivided by longitudinal slots (17) into several deformable segments (18), as well as with a dowel base (13) located on the front end of shank (23) and which is constructed as a sleeve with a bore (29) for receiving a screw, in which on tightening the screw the dowel base (13) bends the segments (18) outwards as a result of an axial movement, and the segments (18) separated from one another by the longitudinal slots (17) have in each case a roughly radially outwardly directed, narrow fin (20) running in the longitudinal direction of the dowel, characterized in that the bore (29) has a screw thread (30) and the fin (20) in the vicinity of its radial outside (21) and roughly in the centre of its longitudinal extension has a notch or cutout (23).

2. Straddling dowel according to one of the preceding claims, characterized in that the segments (18) of the dowel shank (12) are provided on their outside with at least one groove (24), notch, etc., at right angles to the longitudinal axis of the dowel.

3. Straddling dowel according to one of the preceding claims, characterized in that the dowel head (11) has several external, longitudinally directed ribs (15), whose cross-section is roughly triangular with an outwardly directed tip.

4. Straddling dowel according to claim 3, characterized in that the ribs (15) have an increasing radial extension towards the outer end (14) of the dowel head (11).

5. Straddling dowel according to claim 3 or 4, characterized in that the ribs (15) have a transverse dimension increasing towards the outer end (14) of the dowel head (11).

6. Straddling dowel according to one of the preceding claims, characterized in that the inner bore of the dowel shank (12) has a larger diameter than the crest diameter of the thread (30) of dowel base (29).

7. Straddling dowel according to one of the preceding claims, characterized in that the dowel is produced with slightly outwardly prebent segments (18).

8. Straddling dowel according to one of the preceding claims, characterized in that the thread portions of thread (30) are not completed.

9. Straddling dowel according to one of the preceding claims, characterized in that the length of the thread (30) of the dowel base (13) is chosen in such a way that there are at least two complete thread turns in it.

## Revendications

1. Cheville expansible en matière plastique, comprenant une tête de cheville (11), une tige de cheville (12) qui se raccorde à celle-ci et qui est divisée par des fentes longitudinales (17) en plusieurs segments déformables (18), et une queue de cheville (13) qui est disposée à l'extrémité antérieure de la tige (12) et qui est réalisée sous la forme d'un manchon pourvu d'un perçage (29) recevant une vis, cependant que la queue (13) de la cheville courbe les segments (18) vers l'extérieur par déplacement axial lors du serrage de la vis, et que les segments (18), lesquels sont séparés les uns des autres par les fentes longitudinales (17), présentent à chaque fois une ailette étroite (20) qui est dirigée à peu près radialement vers l'extérieur dans la direction longitudinale de la cheville, caractérisée par le fait que le perçage (29) présente un filetage (30) destiné à une vis, et que l'ailette (20) présente une encoche ou, respectivement, une entaille (23) dans la région de son côté (21) qui est à l'extérieur dans le sens radial et à peu près au milieu de son étendue dans la direction longitudinale.

2. Cheville expansible selon la revendication précédente, caractérisée par le fait que les segments (18) de la tige (12) de la cheville présentent chacun sur leur côté extérieur au moins une gorge (24), une entaille ou similaire qui s'étend transversalement par rapport à l'axe longitudinal de la cheville.

3. Cheville expansible selon l'une des revendications précédentes, caractérisée par le fait que la tête (11) de la cheville présente plusieurs nervures extérieures (15) qui s'étendent dans la direction longitudinale et dont la section transversale est à peu près triangulaire, la pointe étant dirigée vers l'extérieur.

4. Cheville expansible selon la revendication 3, caractérisée par le fait que les nervures (15) présentent une étendue dans le sens radial qui augmente dans la direction de l'extrémité extérieure (14) de la tête (11) de la cheville.

5. Cheville expansible selon la revendication 3 ou 4, caractérisée par le fait que les nervures (15) présentent une dimension transversale qui augmente dans la direction de l'extrémité extérieure (14) de la tête (11) de la cheville.

6. Cheville expansible selon l'une des revendications précédentes, caractérisée par le fait que le perçage intérieur de la tige (12) de la cheville présente un diamètre supérieur au diamètre extérieur du filetage (30) de la queue (13) de la cheville.

7. Cheville expansible selon l'une des revendications précédentes, caractérisée par le fait que la cheville est fabriquée en présentant des segments (18) qui sont légèrement courbés au préalable vers l'extérieur.

8. Cheville expansible selon l'une des revendications précédentes, caractérisée par le fait que les spires du filetage (30) ne sont pas complètement formées.

9. Cheville expansible selon l'une des revendications précédentes, caractérisée par le fait que la longueur du filetage (30) de la queue (13) de la cheville est choisie d'une manière telle qu'au moins deux spires de filetage complètes soient comprises dans celui-ci.
